# EUROPÄISCHE PATENTSCHRIFT

(11) **EP 1 081 204 B1**
(45) Veröffentlichungstag und Bekanntmachung des Hinweises auf die Patenterteilung: **05.11.2003**
(21) Anmeldenummer: 00116574.5
(22) Anmeldetag: 01.08.2000
(51) Int. Cl.: C09J 121/00, C09J 7/02, C08F 8/34, C08J 3/24

(54) **Verwendung von Schwefel und Schwefelspendern zur Vernetzung von hochviskosen selbstklebenden Schmelzhaftklebermassen basierend auf nicht thermoplastischen Elastomeren**
Use of sulfur for curing high-viscosity pressure-sensitive self-adhesive materials based on non-thermoplastic elastomers
Utilisation de soufre pour la réticulation de matières adhésives autocollantes sensibles à la pression à haute viscosité à base d'élastomères non-thermoplastiques

(30) Priorität: 18.08.1999 DE 19939071
(43) Veröffentlichungstag der Anmeldung: 07.03.2001
(73) Patentinhaber: Tesa AG, 20253 Hamburg (DE)
(72) Erfinder: Burmeister, Axel, 22307 Hamburg (DE); Stähr, Jochen, 30179 Hannover (DE); Hansen, Sven, 20255 Hamburg (DE); Leydecker, Heiko, 24730 Neustadt/Holstein (DE); Kreft, Christian, 21077 Hamburg (DE)

(56) Entgegenhaltungen:
- US-A- 5 760 135
- US-A- 5 798 175

## Beschreibung

Die vorliegende Erfindung bezieht sich auf die Verwendung von Schwefel zur chemisch/thermischen Vernetzung von druckempfindlichen Schmelzhaftklebern (pressure sensitive adhesives, PSA) auf Basis nicht-thermoplastischer Elastomerer, wie zum Beispiel Naturkautschuk, unter Verwendung von klebrigmachenden Harzen, gegebenenfalls Füllstoffen und Weichmachern und auf die Beschichtung dieser Schmelzhaftkleber zur Herstellung von selbstklebenden Artikeln, insbesondere zur Herstellung hochleistungsfähiger selbstklebender Artikel wie Bänder oder Etiketten.

Die in den letzten Jahren entwickelten Schmelzhaftkleber auf der Polymerbasis nicht-thermoplastischer Elastomerer, wie zum Beispiel Naturkautschuk oder anderer hochmolekularer Kautschuke, weisen ohne Vernetzungsschritt nach der Beschichtung eine für die meisten Anwendungen ungenügende Kohäsion auf. Diese äußert sich in mangelnder Scherfestigkeit der so gefertigten selbstklebenden Bänder und kann sogar zur Ausbildung von störenden Kleberrückständen führen, welche eine gewünschte rückstandsfreie Wiederablösbarkeit nach dem Gebrauch unmöglich machen.

Dieser Mangel verhinderte über lange Jahre hinweg den Einsatz von Schmelzhaftklebern auf der Basis von Naturkautschuk in den traditionell stark von Naturkautschuk dominierten Einsatzgebieten von Selbstklebebändern, wie den Masking Tapes oder den Verpackungsklebebändern.

Die bisher für Schmelzhaftkleber auf Basis nicht-thermoplastischer Elastomerer eingesetzten Vernetzungsverfahren mittels ionisierender Strahlung (Elektronenstrahlen = ESH oder Ultraviolettes Licht = UV) erfordern das Vorhandensein von entsprechenden kostenintensiven Anlagen wie Strahlenquellen und aufwendigen Schutzeinrichtungen, zumal bei größeren Schichtdicken.

Darüber hinaus ist die UV-Vernetzung bei vielen üblichen Bestandteilen wie Füllstoffen, nicht transparenten Harzen und Pigmenten sowie im Falle dicker Kleberschichten nur äußerst begrenzt einsetzbar.

Der Einsatz von ausschließlich nicht-thermoplastischen Kautschuken als Elastomerkomponente in der Haftkleberrezeptierung mit dem bestehenden Kostenvorteil, den zum Beispiel Naturkautschuke gegenüber den handelsüblichen Blockcopolymeren aufweisen, und den herausragenden Eigenschaften, insbesondere der Scherfestigkeit des Naturkautschuks und entsprechender Synthesekautschuke, sowie Verfahren der Herstellung, der Beschichtung und der Vernetzung von Schmelzhaftklebern auf Basis nicht-thermoplastischer Elastomerer werden auch in den Patenten WO 94 11 175 A1, WO 95 25 774 A1, WO 97 07 963 A1 und entsprechend US 5,539,033, US 5,550,175 sowie EP 0 751 980 B1 und EP 0 668 819 B 1 ausführlich dargestellt.

Hierbei werden die in der Haftklebertechnik gebräuchlichen Zusätze wie Tackifier-Harze, Weichmacher und Füllstoffe beschrieben.
Das jeweils offenbarte Herstellungsverfahren basiert auf einem Doppelschneckenextruder, der bei der gewählten Prozeßführung über Mastikation des Kautschuks und anschließender stufenweise Zugabe der einzelnen Zusätze mit einer entsprechenden Temperaturführung die Compoundierung zu einer homogenen Haftkleberabmischung ermöglicht.
Ausführlich wird der dem eigentlichen Herstellprozeß vorgeschaltete Mastikationsschritt des Kautschuks beschrieben. Er ist notwendig und charakteristisch für das gewählte Verfahren, da er bei der dort gewählten Technologie unumgänglich für die nachfolgende Aufnahme der weiteren Komponenten und für die Extrudierbarkeit des fertig abgemischten Schmelzhaftklebers ist. Beschrieben wird auch die Einspeisung von Luftsauerstoff, wie sie von R. Brzoskowski, J.L. und B. Kalvani in Kunststoffe 80 (8), (1990), S. 922 ff., empfohlen wird, um die Kautschukmastikation zu beschleunigen.

Diese Verfahrensweise macht den nachfolgenden Schritt der Elektronenstrahlvernetzung (ESH) unumgänglich, ebenso wie den Einsatz von reaktiven Substanzen als ESH-Promotoren zum Erzielen einer effektiven Vernetzungsausbeute.

Beide Verfahrensschritte sind in den genannten Patenten beschrieben, die gewählten ESH-Promotoren neigen aber auch zu unerwünschten chemischen Vernetzungsreaktionen unter erhöhten Temperaturen, dies limitiert den Einsatz bestimmter klebrigmachender Harze.

Aufgrund der unvermeidbaren hohen Produkttemperaturen verbietet eine Compoundierung im Doppelschneckenextruder den Einsatz thermisch aktivierbarer Substanzen, die zur Vernetzung der Selbstklebemassen geeignet sind, wie zum Beispiel reaktiver (optional halogenierter) Phenolharze, Schwefel- oder Schwefelabspaltender Vernetzersysteme, weil es wegen der im Prozeß einsetzenden chemischen Vernetzungsreaktionen zu so erheblicher Viskositätserhöhung kommt, daß der resultierende Schmelzhaftkleber seine Streichfähigkeit einbüßt.

In der Patentanmeldung JP 95 278 509 wird ein Selbstklebeband offenbart, bei dessen Herstellung Naturkautschuk auf ein mittleres Molekulargewicht von M_{w} = 100.000 bis 500.000 mastiziert wird, um eine streichfähige homogene Mischung mit Kohlenwasserstoff-, Kolophonium-/derivat- oder Terpen-Harzen zu erhalten, die zwischen 140 °C und 200 °C mit einer Streichviskosität von 10 bis 50 x 10³ cps gut verarbeitbar ist, anschließend jedoch eine extrem hohe ESH-Dosis (40 Mrad) erfordert, um die für den Gebrauch notwendige Scherfestigkeit zu erhalten.
Für Trägermaterialien wie imprägnierte und/oder geleimte Papiere sowie Gewebeträger auf Basis Zellwolle u.ä. ist das System wenig tauglich, da bei den erforderlich hohen Strahlendosen eine signifikante Trägerschädigung erfolgt.

Für Trägermaterialien wie imprägnierte und/oder geleimte Papiere sowie Gewebeträger auf Basis Zellwolle u.ä. ist das System wenig tauglich, da bei den erforderlich hohen Strahlendosen eine signifikante Trägerschädigung erfolgt.

Nachteil der in den zitierten Dokumenten beschriebenen Vernetzungstechnologien (im wesentlichen ESH-Bestrahlung) ist neben der notwendigen Investition auch die Schädigung bestimmter empfindlicher Träger durch Elektronenstrahlen. Dieses kommt besonders im Falle von Papierträgern, Zellwollgeweben, silikonisierten Trennpapieren, vor allem aber im Falle von weitverbreiteten Folienmaterialien wie Polypropylen durch Verschlechterung der Reißdehnungseigenschaften zum Ausdruck.

Viele handelsübliche PVC-Folien neigen außerdem unter ESH-Bestrahlung zu Verfärbungen, welche sich bei hellen oder transparenten Folienqualitäten nachteilig auswirken.

Weiterhin werden viele der bei der Klebebandherstellung üblichen Releaselacke durch Elektronenbestrahlung geschädigt und damit in ihrer Wirkung beeinträchtigt. Dies kann im Extremfall zur Nichtabrollbarkeit von Klebebandrollen oder zur Nichtwiederverwendbarkeit von im Klebebandherstellungsprozeß benötigten Transfer-Trennpapieren führen.

Einige Synthesekautschuke, wie Polyisobutylen (PIB), Butylkautschuk (IIR) und halogenierter Butylkautschuk (XIIR) schließlich sind einer Elektronenstrahlenvernetzung nicht zugänglich und bauen unter Bestrahlung ab.

Ein Weg zur Minimierung dieser Nachteile besteht in der Verwendung von bestimmten Substanzen, welche die benötigte Strahlendosis und damit die Begleitschäden mindern. Eine Reihe solcher Substanzen sind als ESH-Promotoren bekannt. Allerdings können ESH-Promotoren auch zu unerwünschten chemischen Vernetzungsreaktionen unter erhöhten Temperaturen neigen, dies begrenzt die Auswahl der für die Schmelzhaftkleberherstellung brauchbaren ESH-Promotoren und limitiert darüber hinaus den Einsatz bestimmter klebrigmachender Harze. Diese Restriktionen und bestimmte vorteilhafte Kombinationen von ESH-Promotoren und nichtvernetzenden phenolischen Klebharzen sind Gegenstand insbesondere der Schrift WO 97/07963.

Der Einsatz von nicht-thermoplastischen Elastomeren wird ferner beschrieben in JP 95 331 197, wobei Naturkautschuk mit einem mittleren Molekulargewicht (Gewichtsmittel) M_{w} < 1 Million g/mol mit aliphatischen, nichtreaktiven Kohlenwasserstoffharzen Verwendung findet, der mit blockierten Isocyanaten abgemischt, bei 150 °C fünf Minuten lang vorvernetzt und nach anschließendem Ausstreichen auf PET-Folie bei 180°C mehrere Minuten (zum Beispiel 15 Minuten) lang ausgehärtet wird.

Nachteil dieses Verfahrens ist einesteils das bei der Vernetzungsreaktion freiwerdende Blockierungsmittel, welches einerseits, wenn es in dem Schmelzhaftklever verbleibt, die Klebeigenschaften des Bandes in vielerlei Hinsicht beeinträchtigen kann, und andererseits beim Ausdampfen zu Beschichtungsdefekten wie Porositäten führt und aufwendige Technik zur Absaugung und Entfernung dieser Blockierungsmittel nötig macht .

Von besonderem Nachteil ist aber die hohe Vernetzungstemperatur, welche temperaturempfindliche Träger wie viele Folien und Schäume prinzipiell ausschließt und im Falle von Papierträgem und Trennpapieren zur Versprödung führen kann.

Zusammenfassend kann festgestellt werden, daß zur Vernetzung der bekannten Schmelzhaftkleber auf Basis nicht-thermoplastischer Elastomerer entweder schädlich hohe Strahlendosen oder aber schädlich hohe Temperaturen bei langen Vernetzungszeiten benötigt werden und beides bei einer Vielzahl der üblichen Trägermaterialien Schädigungen zur Folge hat.

Aufgabe der Erfindung ist es, hier Abhilfe zu schaffen und die ökonomischen Vorteile der lösemittelfreien Fertigung und Beschichtung von Schmelzhaftklebem auf Basis nicht-thermoplastischer Elastomerer mit den chemisch-thermischen Vernetzungsmöglichkeiten der konventionellen Lösemitteltechnologie für dicke, auch gefüllte und eingefärbte Schmelzhaftkleber mit hohen Schichtdicken auf strahlen- und temperaturempfindlichen Trägermaterialien zu verbinden sowie die Nachteile der gemäß dem Stand der Technik in Schmelzhaftklebern verwendbaren thermischen Vernetzer zu umgehen.

Gelöst wird diese Aufgabe durch einen Schmelzhaftkleber, wie er im Hauptanspruch näher gekennzeichnet ist Gegenstand der Unteransprüche sind vorteilhafte Fortführungen des Erfindungsgegenstandes, vorteilhafte Verwendungsmöglichkeiten sowie Verfahren zur Herstellung der mit dem Erfindungsgegenstand beschichteten Trägermaterialien.

Demgemäß beschreibt die Erfindung einen Schmelzhaftkleber auf der Basis eines oder mehrerer nicht-thermoplastischer Elastomerer, der sich zusammensetzt aus:
- 100 Masseteilen des oder der nicht-thermoplastischen Elastomerer,
- 1 bis 200 Masseteilen eines oder mehrerer klebrigmachender Harze sowie Schwefel oder Schwefelspendern, wobei der Schmelzhaftkleber 20 millimol bis 8 mol (mit Ausnahme von 1,1 mol) des freien Schwefels pro Kilogramm des oder der verwendeten nicht-thermoplastischen Elastomere enthält.

Anders ausgedrückt kann der Schmelzhaftkleber Schwefel oder Schwefelspendern enthalten, und zwar 20 Millimol bis 1,099 mol und/oder 1,1001 bis 8 mol des freien Schwefels pro Kilogramm des oder der verwendeten nicht-thermoplastischen Elastomere.

Vorzugsweise weist das Elastomer beziehungsweise das Elastomergemisch eine mittlere Molmasse von 300.000 bis 1,5 *10⁶ g/mol auf, wobei der Wert mit einer GPC-Messung als Gewichtsmittel bestimmt wird.
Bei der GPC-Messung (Gelpermeationschromatographie, eine als Säulenchromatographie durchgeführte Flüssigkeitschromatographie) wird eine flüssige Phase mit dem gelösten Polymeren durch ein Gel gegeben. Kleinere Moleküle des Gelösten können in alle Poren eindringen (diffundieren), ihnen steht das gesamte Volumen der mobilen Phase in der Trennsäule zur Verfügung. Aus diesem Grund werden sie länger in der Säule zurückgehalten als die größeren Moleküle. Solche Moleküle, die größer sind als die größten Poren des gequollenen Gels, können die Gelkörner nicht durchdringen und wandern an diesen vorbei; sie verlassen die Säule zuerst. Die Moleküle erscheinen daher im Eluat in der Reihenfolge abnehmender Molekülgröße. Da die Molekülgröße im allgemeinen der Molmasse proportional ist, bietet die Gelchromatographie die Möglichkeit zu Trennung und Reinigung von Substanzen verschiedener Molmassen und zur Molmassenbestimmung.

Weiter vorzugsweise zeigt der Schmelzhaftkleber in unvernetztem Zustand eine komplexe Viskosität von 10.000 bis 300.000 Pa*s bei 0,1 rad/s und 110 °C, bevorzugt 30.000 bis 170.000 Pa*s bei 0,1 rad/s und 110 °C, ganz besonders 40.000 bis 140.000 Pa*s bei 0,1 rad/s und 110 °C.

Die nicht-thermoplastischen Elastomere sind vorteilhafterweise ausgewählt aus der folgenden Gruppe, und zwar einzeln oder in beliebiger Mischung:
- Naturkautschuke
- statistisch copolymerisierte Styrol-Butadien-Kautschuke (SBR)
- Butadien-Kautschuke (BR)
- synthetische Polyisoprene (IR)

In einer weiteren vorteilhaften Weiterbildung der Erfindung umfaßt der Schmelzhaftkleber einen Polymerblend von einem oder mehreren der nicht- thermoplastischen Elastomeren und einem oder mehreren thermoplastischen Elastomeren, wobei letztere wieder ausgewählt werden können aus anschließenden Aufzählung, und zwar einzeln oder in beliebiger Mischung:
- Polypropylene
- Polyethylene
- metallocen katalysierte Polyolefine
- Polyester
- Polystyrole
- Blockcopolymeren-Synthesekautschuke

Weiterhin können die in der Klebebandproduktion oft genutzten Temperprozesse, wie sie beispielsweise zur Entspannung von Folienmaterialien nötig sind, für die Vernetzung der Schmelzhaftkleber genutzt werden. In einer besonders vorteilhaften Ausführungsform wird die Vernetzung nicht nur mittels Temperatur und Verweilzeit geregelt, sondern auch über die Zugabe von Katalysatoren, wie sie für die Gummiindustrie bekannt sind und unter anderem in "A Review of sulfur crosslinking fundamentals for accelerated an un accelerated vulcanization" ["Rubber Chemistry and Technology Vol 66 page 376- 410] beschrieben ist.

Um eine Beschleunigung der Vernetzung herbeizuführen, kann der besagte Schwefel oder Schwefelspender des Schmelzhaftklebers mit einem Katalysator versetzt werden, so zum Beispiel Benzothiazole, Benzothiazolsulfenamide, Dithiocarbamate oder Amine.

Prinzipiell geeignet sind eine Vielzahl weiterer Katalysatoren. Die folgende Tabelle stellt eine mögliche Auswahl an Katalysatoren dar, wobei diese Tabelle nicht als abschließend zu betrachten ist. Vielmehr stellt es den Fachmann vor keinerlei Schwierigkeiten auch andere als die hier explizit erwähnten Stoffe einzusetzen.

**Tabelle:**

| Übersicht über die einzusetzenden Katalysatoren | |
|---|---|
| Benzothiazole | |
| 2-Mercaptobenzothiazol | MBT |
| 2,2'-Dithiobisbenzothiazol | MBTS |

| Benzothiazolesulfenamide | |
|---|---|
| N-Cyclohexylbenzothiazol-2-sulfenamid | CBS |
| N-t-Butylbenzothiazol-2-sulfenamid | TBBS |
| 2-Morpholinothiobenzothiazol | MBS |
| N-Dicyclohexylbenzothiazol-2-sulfenamid | DCBS |

| Dithiocarbamate | |
|---|---|
| Zinkethylphenyldithiocarbamat | ZPEC |

| Amine | |
|---|---|
| Cyclohexylthiodibutylamin | CDBA |
| Dibenzothiazyldisulfid | MBTS |

Dem Schmelzhaftkleber können Füllstoffe zugesetzt sein, die insbesondere ausgewählt werden können aus der Gruppe der Metalloxide, Kreiden, besonders bevorzugt der Kreiden mit spezifischen Oberflächen von 3 bis 20 m²/g, gefällter oder pyrogener Kieselsäuren, besonders bevorzugt der Kieselsäuren mit spezifischen Oberflächen von 20 bis 250 m²/g, bevorzugt 40 bis 200 m²/g, Voll- oder Hohlglaskugeln, besonders bevorzugt der Voll- oder Hohlglaskugeln mit dem mittleren Durchmesser von 3 bis 200 µm, bevorzugt 5 bis 135 µm, der Mikroballons, der Ruße, besonders bevorzugt der Ruße mit spezifischen Oberflächen von 20 bis 120 m²/g, und/oder der Glas- oder der Polymerfasern. Ebenso können die oberflächenmodifizierten Varianten der oben aufgeführten Füllstoffe Verwendung finden.

Bei den Mikroballons handelt es sich um elastische, thermoplastische Hohlkugeln, die eine Polymerhülle aufweisen. Diese Kugeln sind mit niedrigsiedenden Flüssigkeiten oder verflüssigtem Gas gefüllt. Als Polymere für die Hülle sind insbesondere Acrylnitril, PVDC, PVC oder Acrylate geeignet Als niedrigsiedende Flüssigkeit kommen Kohlenwasserstoffe wie die niederen Alkane, beispielsweise Pentan, als verflüssigtes Gas Chemikalien wie Isobutan in Frage.
Besonders vorteilhafte Eigenschaften zeigen sich, wenn es sich bei den Mikroballons um solche handelt, die bei 25 °C einen Durchmesser aufweisen von 3 µm bis 40 µm, insbesondere 5 µm bis 20 µm.
Durch Wärmeeinwirkung dehnen sich die Kapseln irreversibel aus und expandieren dreidimensional. Die Expansion ist beendet, wenn der Innen- und Außendruck sich ausgleichen. So erzielt man einen geschlossenzelligen Schaumträger, welcher sich durch gutes Auffließverhalten und hohe Rückstellkräfte auszeichnet.

Nach der thermischen Expansion aufgrund erhöhter Temperatur weisen die Mikroballons vorteilhafterweise einen Durchmesser von 20 µm bis 200 µm, insbesondere 40 µm bis 100 µm, auf.
Die Expansion kann dabei vor oder nach dem Einarbeiten in die Polymermatrix erfolgen, aber auch vor oder nach dem Einarbeiten in die Polymermatrix und dem Ausformen. Möglich ist, auch die Expansion nach dem Einarbeiten in die Polymermatrix und vor dem Ausformen vorzunehmen.

Die Füllstoffe sollten in Anteilen von 1 bis 300 Masseteilen bezogen auf 100 Anteile Elastomerer zugesetzt werden, und zwar einzeln oder in beliebiger Kombination der einzelnen Füllstoffe.

Weiterhin vorteilhaft ist die Zumischung von Weichmachern in den Schmelzhaftkleber, die wiederum insbesondere ausgewählt aus der Gruppe der paraffinischen oder naphthenischen Öle, besonders bevorzugt der paraffinischen oder naphthenischen Öle mit kinematischen Viskositäten bei 20 °C zwischen 40 und 255 mm²/s, der oligomeren Nitrilkautschuke, besonders bevorzugt der flüssigen Nitrilkautschuke mit ACN-Gehalt von 20 bis 40 Gew.-%, besonders 20 bis 35 Gew.-%, der flüssigen Isoprenkautschuke, besonders bevorzugt der Isoprenkautschuke mit Molmassen zwischen 10000 und 70000 g/mol, der Oligobutadiene, besonders bevorzugt der Oligobutadiene oder funktionalisierten Oligobutadiene mit Molmassen von 1.500 bis 70.000 g/mol, der Weichharze, besonders bevorzugt der Weichharze mit Molmassen von 100 bis 2000 g/mol, besonders 250 bis 1700 g/mol, der Wollfette oder der Raps- und Rhizinusöle.

Verwendung finden kann der erfindungsgemäße Schmelzhaftkleber zur Herstellung eines selbstklebenden Artikels, indem dieser auf ein bahnförmiges Material, zum Beispiel ein beidseitig antiadhäsiv beschichtetes Material, zumindest einseitig aufgetragen wird, wobei der Schmelzhaftkleber mit einem bevorzugtem Masseauftrag von 5 bis 3000 g/m², besonders bevorzugt von 10 bis 200 g/m² beschichtet wird.

Bei dem bahnförmigen Material handelt es sich insbesondere um einen einseitig oder beidseitig beschichteten Papierträger oder einen einseitig oder beidseitig beschichtetem Polymerfolienträger, wobei der Masseauftrag zwischen 5 bis 200 g/m² und besonders von 10 bis 100 g/m² liegen kann.

Weiterhin können als Träger Gewebe oder Vliese aller Art eingesetzt werden.

Verfestigte Vliese werden beispielsweise auf Nähwirkmaschinen des Typs "Malivlies" der Firma Malimo hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer, ehemals Malimo, schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln, sowohl auf der Oberals auch auf der Unterseite verfestigt ist.
Schließlich sind auch Nähvliese geeignet. Ein Nähvlies wird aus einem Vliesmaterial mit einer Vielzahl parallel zueinander verlaufender Nähte gebildet. Diese Nähte entstehen durch das Einnähen oder Nähwirken von textilen Fäden. Für diesen Typ Vlies sind Nähwirkmaschinen des Typs "Maliwatt" der Firma Karl Mayer, ehemals Malimo, bekannt.

Als Ausgangsmaterialien für den textilen Träger sind insbesondere Polyester-, Polypropylen- oder Baumwollfasern vorgesehen. Die vorliegende Erfindung ist aber nicht auf die genannten Materialien beschränkt, sondern es können eine Vielzahl weiterer Fasern zur Herstellung des Vlieses eingesetzt werden.

Genadelte, naßgelegte beziehungsweise luft- und/oder wasserstrahlverfestigte Vliese können beispielsweise bei der Firma Freudenberg bezogen werden.

Als besonders geeignet zeigen sich dabei Dicken des Schmelzhaftklebers auf dem bahnförmigen Material zwischen 5 µm und 3000 µm, vorzugsweise zwischen 15 µm und 150 µm.

Darüber hinaus kann der Schmelzhaftkleber auf einem beidseitig antiadhäsiv beschichtetes Trennpapier in einer Dicke aufgetragen sein von 20 um bis 3000 µm, besonders 40 µm bis 1500 µm.

### Beispiele

Die folgenden Beispiele sollen die erfindungsgemäße Verwendung von Schwefel oder Schwefelspendern zur chemischen Vernetzung von Naturkautschuk-Schmelzhaftklebern illustrieren, ohne die Erfindung einzuschränken.

Die eingesetzten Prüfmethoden sind im folgenden kurz charakterisiert:

Die klebtechnischen Prüfungen der Klebebandmuster wurden jeweils nach 24 h Lagerzeit bei Raumtemperatur und vergleichend je nach Beispiel nach 7-tägiger Temperung bei 70 °C durchgeführt, wobei die getemperten Muster zusätzlich vor den Messungen zwecks Vergleichbarkeit der Meßergebnisse 24h bei 23 °C und 50 % Luftfeuchtigkeit gelagert wurden.

### Prüfmethode 1: Klebkraft

Die Klebkraft (Schälfestigkeit) der Klebebandmuster wurde nach AFERA 4001 bestimmt Sinkende Klebkraftwerte sind im allgemeinen ein Zeichen für zunehmenden Vemetzungsgrad des Schmelzhaftklebers.

### Prüfmethode 2: Scherfestigkeit

Die Scherfestigkeit der untersuchten Klebebandmuster wurde nach PSTC 7 (Holding Power) bestimmt. Alle angegebenen Werte wurden bei Raumtemperatur mit einer Verklebungsfläche von 20x13 mm² bestimmt. Als Versuchsergebnis wurde neben der Haltezeit in Minuten die Bruchart gewertet, wobei ein kohäsives ( c ) Versagen auf eine zu geringe Vernetzung, ein adhäsives ( a ) auf eine zu hohe Vernetzung deutet.

### Prüfmethode 3: Quelltest

In einer vereinfachten Prozedur kann der Vernetzungsgrad des Schmelzhaftklebers auf der Polymerbasis nicht-thermoplastischer Elastomerer auch vergleichend aus Quellungsmessungen bestimmt werden.

Hierzu wird ein Klebebandstreifen für 10 Minuten in Siedegrenzenbenzin 60/95 gelegt und anschließend visuell und mechanisch mit einem Spatel auf Vorhandensein und auf Konsistenz des auf dem Band verbleibenden gequollenen Schmelzhaftkleber-Geles untersucht.

Das Ergebnis wird als "Quelltest" angegeben und umfaßt eine Skala von 0 bis 6.

Es bedeuten:

| Quelltestnote | Gelkonsistenz bei Quelltest |
|---|---|
| 0 | Masseschicht auflösend und schlammig d.h. Vernetzung nicht erkennbar |
| 1 | Starkes Quellen, Masse stark schleimig und selbstablaufend d.h. sehr geringe Vernetzung |
| 2 | Starkes Quellen, Masse schleimig und leicht abschiebbar |
| 3 | Gutes Quellen, Masse weniger schleimig und abschiebbar |
| 4 | Schwaches Quellen, Masse kaum schleimig, noch abschiebbar |
| 5 | Kaum Quellen, Masse fast schichtbeständig und kaum abschiebbar |
| 6 | Kein Quellen, Masse schichtbeständig und nur abkratzbar |

Die optimale Vernetzung hängt von der Anwendung des konkreten Klebebandes ab, ausgedrückt wird der Vernetzungsgrad durch die Quelltest-Note.

### Herstellung der Beispiele

Alle beschriebenen Rezepturen sind wie folgt hergestellt worden.

In einem ersten Verfahrensschritt wurde ein Vorbatch hergestellt. Der Vorbatch wurde nach der als VB-A bezeichneten Rezeptur in einem Banbury-Kneter des Typs GK 1,4 N der Firma Werner & Pfleiderer, Stuttgart, hergestellt.

Knetkammer und Rotoren waren auf 25 °C temperiert, die Schaufeldrehzahl betrug 50 min⁻¹. Das Gesamtgewicht des Vorbatches betrug 1,1 kg. Alle Bestandteile wurden trocken vorvermischt und gemeinsam mit dem Weißöl dosiert.

Der Naturkautschuk wurde vor seiner Verwendung granuliert, und zwar in einem Granulator der Fa. Pallmann unter Verwendung von geringen Mengen Talkums als Trennmittel.

Eine Mischzeit von sechs Minuten war ausreichend für die Homogenisierung der Bestandteile des Vorbatches.

In einem Verfahrensschritt 2 wurde der Naturkautschuk-Schmelzhaftkleber fertiggemischt. In einer Knetmaschine der Bauart LUK1.0 K3 der Firma Werner & Pfleiderer, Stuttgart, wurden hierzu dem Vorbatch alle weiteren Zuschlagsstoffe zugesetzt, so daß ein Naturkautschuk-Schmelzhaftkleber entsprechend der Bruttorezeptur resultierte. Der Vorbatch wurde ½ Minute geknetet, dann das gesamte Klebharz und Rhenogran S 80 sowie Rhenogran ZEPC 80 zugesetzt. Das Rhenocure HX wurde nach 10 Minuten zugemischt, nach 12-13 min war die Klebmasse fertig.

Wahlweise konnte der Mischvorgang zwecks Vermeidung von oxydativem Abbau unter Inertgasatmosphäre (N₂, Argon, CO₂) erfolgen.

Die batchweise hergestellten Naturkautschuk-Schmelzhaftkleber wurden sofort nach ihrer Herstellung unter Verwendung eines biegesteifen 2-Walzenauftragswerks beschichtet. Die Beschichtung des Klebefilms auf die mit üblicher Technologie geprimerte Seite einer 35 µm starken BOPP-Folie (35 µm BOPP Film der Fa. Pao Yan, Taipeh) erfolgte direkt, und zwar in einer Schichtstärke von 50 bis 80 µm.
Zwischen der ersten und der zweiten bahnführenden Beschichtungswalze wurde gemäß der Auftragsdicke ein Beschichtungsspalt eingestellt. Die erste Walze war auf 140°C temperiert, die bahnführende Walze auf 60 bis 80 °C. Der dem Walzenspalt zugeführte Naturkautschuk-Schmelzhaftkleber wies, je nach Beispiel, eine Temperatur von etwa 60 °C auf.
Die Beschichtung erfolgte mit einer Bahngeschwindigkeit von 1 m/min.

### Eingesetzte Rohstoffe

Alle Rezepturen sind in Gew.- % angegeben.

Es wurden eingesetzt:
- Naturkautschuk: TSR 5L (zu beziehen bei Fa. Weber Schaer, Hamburg) SBR Typ 1500 (Ameripol Synpol Coop., Arkon)
- Klebharz: HERCOTAC 205 (Fa. Hercules BV, Rijswijk, NL)
- Füllstoff: Mahlkreide Mikrosöhl 40 (Vereinigte Kreidewerke Dammann KG, Söhlde)
- Weichmacher: paraffinisches Weißöl Shell Ondina G 33 (Deutsche Shell
- AG,: Hamburg)
- Alterungsschutzmittel: Lowinox ® 22M46, ein 2,2-Methylen-bis-[6-(1,1-dimethylethyl)-4-methyl-phenol)] von der Firma GREATLAKES
- Vernetzungssystem: Rhenogran S-80, Rhenogran ZEPC- 80 und Rhenocure HX jeweils Rhein Chemie Rheinau GmbH Mannheim.

| **Rezepturen** | |
|---|---|
| Vorbatch-Rezeptur A | |
| | Gew.-% |
| Naturkautschuk, granuliert | 71,1 |
| Hercotac 205 | 6,3 |
| Kreide | 12,6 |
| Weißöl | 3,1 |
| Stearinsäure L | 0,6 |
| ZnO aktiv | 4,7 |
| Alterungsschutzmittel | 1,6 |
| Summe | 100 |

Zur Beurteilung der Vernetzung wurde eine Vergleichsrezeptur (Beispiel 1) ohne Vemetzungssystem verarbeitet.

Alle angegebenen sind Gesamtrezepturen resultierend aus Verfahrensschritt 1 und Schritt 2.

### Beispiel 1

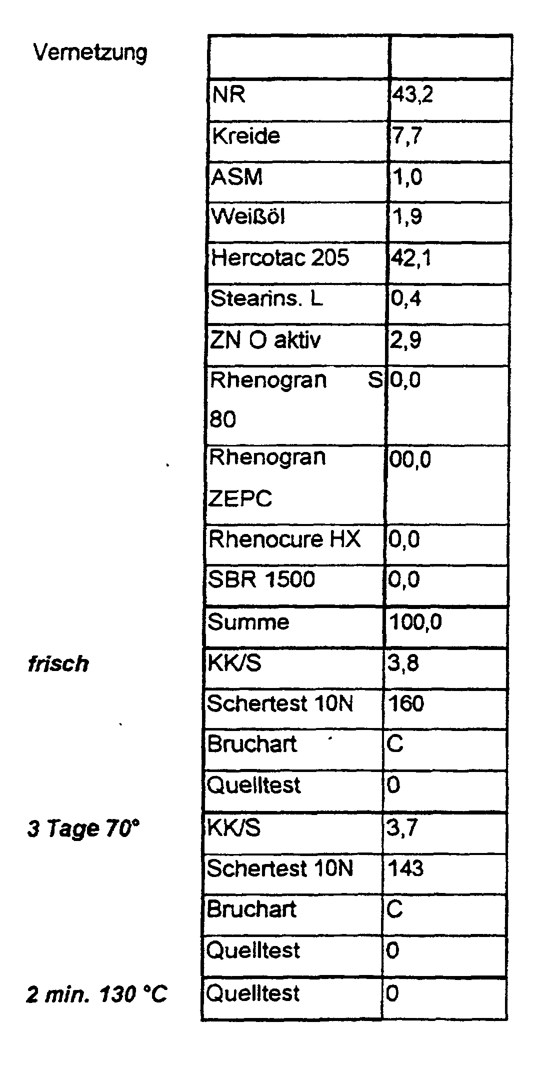

### Beispiele 2 bis 4

Die Beispiele S1 - S3 dienten zur Variation des zweiten Beschleunigers.

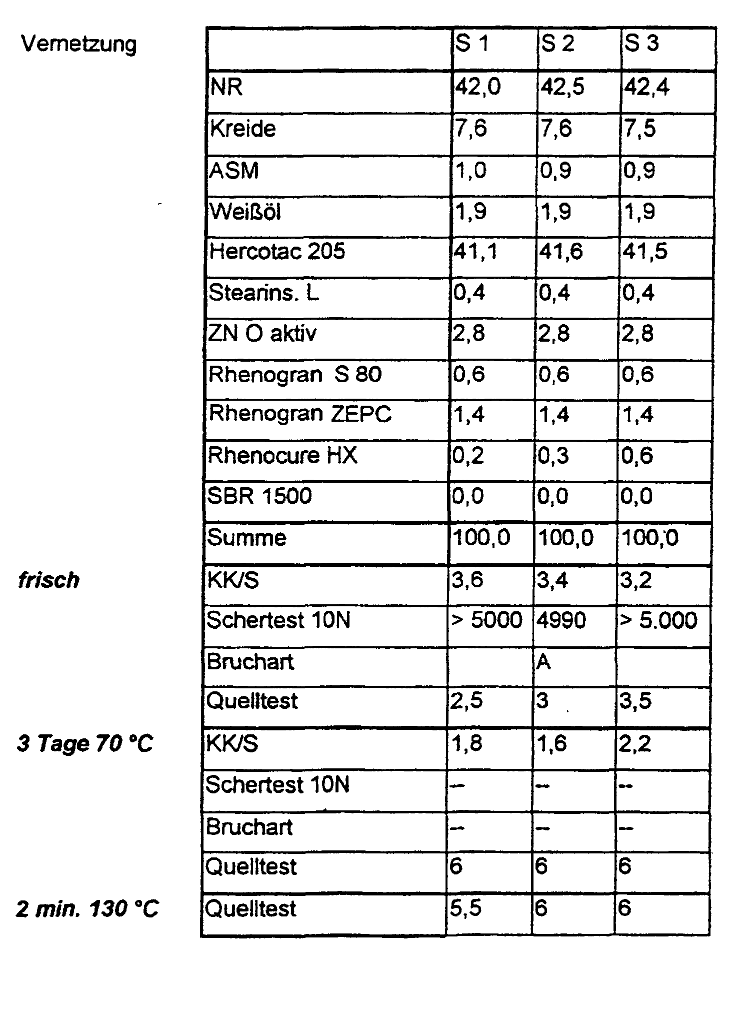

### Beispiele 5 bis 7

Die Beispiele S5 - S7 dienten zur Variation des Schwefelgehalts.

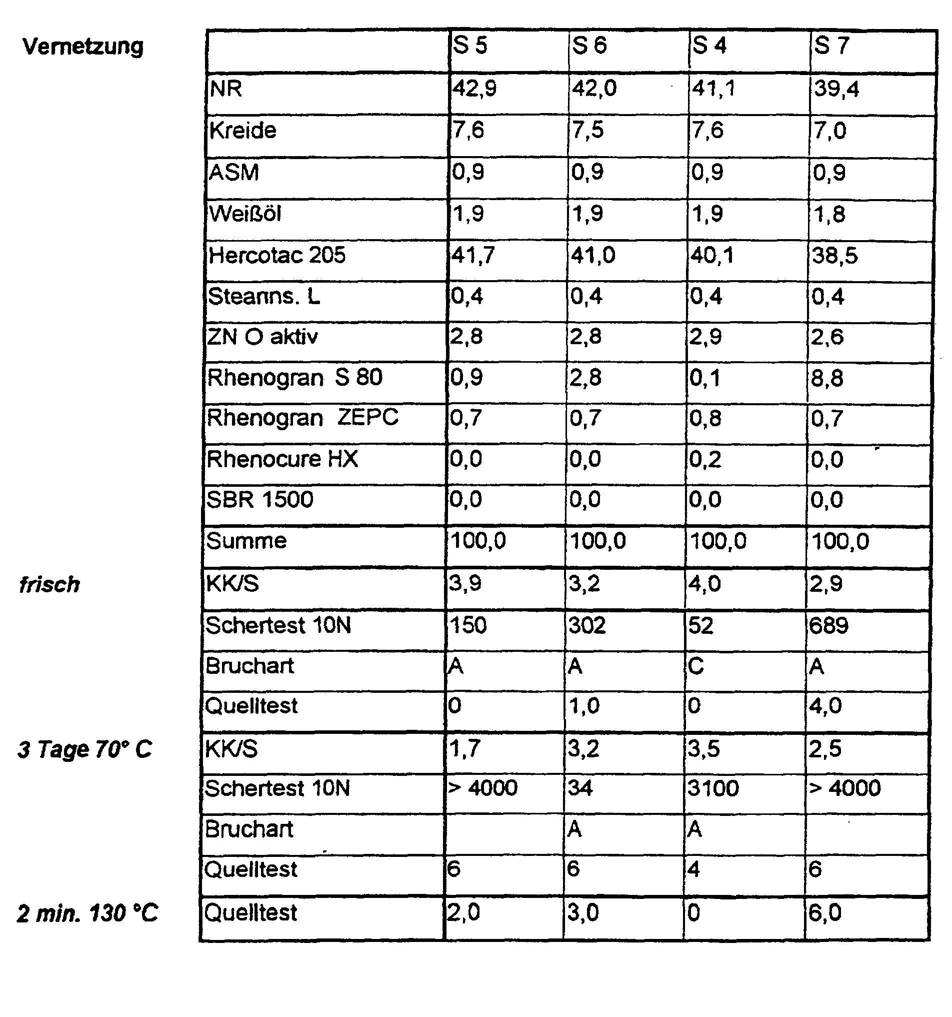

### Beispiele 8

Das Beispiel S8 zeigt ein Polymerblend.

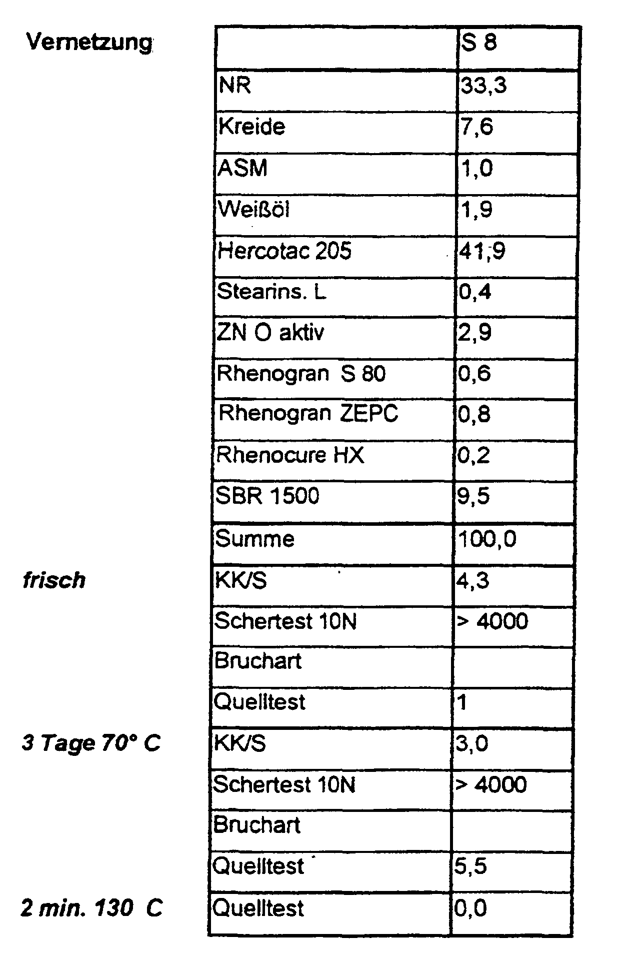

Der SBR wurde im Verfahrensschritt 1 mit eingearbeitet.

## Patentansprüche

1. Schmelzhaftkleber auf der Basis eines oder mehrerer nicht-thermoplastischer Elastomerer, mindestens bestehend aus
100 Masseteilen des oder der nicht-thermoplastischen Elastomerer,
1 bis 200 Masseteilen eines oder mehrerer klebrigmachender Harze sowie Schwefel oder Schwefelspendern, wobei der Schmelzhaftkleber 20 Millimol bis 8 mol des freien Schwefels pro Kilogramm des oder der verwendeten nicht-thermoplastischen Elastomere enthält.

2. Schmelzhaftkleber nach Anspruch 1, **dadurch gekennzeichnet, daß** die nicht-thermoplastischen Elastomere ausgewählt sind aus der Gruppe der
Naturkautschuke, der statistisch copolymerisierten Styrol-Butadien-Kautschuke (SBR), der Butadien-Kautschuke (BR) und der synthetischen Polyisoprene (IR):

3. Schmelzhaftkleber nach Anspruch 1 und 2, **dadurch gekennzeichnet, daß** er basiert auf einem Polymerblend von einem oder mehreren der nicht- thermoplastischen Elastomeren und einem oder mehreren thermoplastischen Elastomeren ausgewählt aus der Gruppe, der Polypropylene, der Polyethylene, der Metallocen katalysierten Polyolefinen, der Polyester, der Polystyrolen, und der Blockcopolymeren Synthesekautschuke.

4. Schmelzhaftkleber nach den Ansprüchen 1 bis 3, **dadurch gekennzeichnet, daß** das Schwefel mittels eines Katalysator beschleunigt wird.

5. Schmelzhaftkleber nach Anspruch 1 bis 4, **dadurch gekennzeichnet, daß** dem Schmelzhaftkleber Füllstoffe zugesetzt sind, insbesondere ausgewählt aus der Gruppe der Metalloxide, Kreiden, gefällter oder pyrogener Kieselsäuren, Voll- oder Hohlglaskugeln, der Mikroballons, der Ruße und/oder der Glas- oder der Polymerfasem.

6. Schmelzhaftkleber nach zumindest einem der vorherigen Ansprüche, **dadurch gekennzeichnet, daß** dem Schmelzhaftkleber Weichmacher zugesetzt sind, insbesondere ausgewählt aus der Gruppe der paraffinischen oder naphthenischen Öle, der oligomeren Nitrilkautschuke, der flüssigen Isoprenkautschuke, der Oligobutadiene, der Weichharze, der Wollfette und/oder der Raps- und Rhizinusöle.

7. Selbstklebender Artikel, erhalten nach mindestens einem der vorhergehenden Ansprüche, **dadurch gekennzeichnet, daß** auf ein bahnförmiges Material zumindest einseitig die Schmelzhaftkieber aufgetragen wird.

8. Selbstklebender Artikel nach zumindest einem der vorherigen Ansprüche, **dadurch gekennzeichnet, daß** die Dicke der Schmelzhafikleber auf dem bahnförmigen Material beträgt zwischen 5 µm und 3000 µm, vorzugsweise zwischen 15 µm und 150 µm.

9. Selbstklebender Artikel nach zumindest einem der vorherigen Ansprüche, **dadurch gekennzeichnet, daß** auf ein beidseitig antiadhäsiv beschichtetes Trennpapier der Schmelzhaftkleber in einer Dicke aufgetragen ist von 20 µm bis 3000 µm, besonders 40 µm bis 1500 µm.

10. Verfahren zur Herstellung von selbstklebenden Artikeln, insbesondere zur Herstellung hochleistungsfähiger selbstklebender Artikel wie Bänder oder Etiketten, **gekennzeichnet dadurch, daß** die Beschichtung des Schmetzhaftklebers nach einem der Ansprüche 1 bis 6 mit Hilfe eines Mehrwalzenauftragswerkes erfolgt, das zwei bis fünf Walzen aufweist.

## Claims

1. Hot-melt pressure-sensitive adhesive based one or more non-thermoplastic elastomers, at least comprising
100 parts by mass of the non-thermoplastic elastomer(s),
from 1 to 200 parts by mass of one or more tackifying resins, and also
sulphur or sulphur donors, the hot-melt pressure-sensitive adhesive comprising from 20 mmol to 8 mol of free sulphur per kilogram of the non-thermoplastic elastomer(s) used.

2. Hot-melt pressure-sensitive adhesive according to Claim 1, **characterized in that** the non-thermoplastic elastomers are selected from the group consisting of natural rubbers, random-copolymerized styrene-butadiene rubbers (SBR), butadiene rubbers (BR) and synthetic polyisoprenes (IR).

3. Hot-melt pressure-sensitive adhesive according to Claim 2, **characterized in that** it is based on a polymer blend of one or more of the non-thermoplastic elastomers and one or more thermoplastic elastomers selected from the group consisting of polypropylenes, polyethylenes, metallocene-catalysed polyolefins, polyesters, polystyrenes and synthetic block copolymer rubbers.

4. Hot-melt pressure-sensitive adhesive according to Claims 1 to 3, **characterized in that** the sulphur is accelerated by means of a catalyst.

5. Hot-melt pressure-sensitive adhesive according to Claim 1 to 4, **characterized in that** fillers are added to the adhesive which are selected in particular from the group consisting of metal oxides, chalks, precipitated or pyrogenic silicas, solid or hollow glass beads, microballoons, carbon blacks and/or glass fibres or polymer fibres.

6. Hot-melt pressure-sensitive adhesive according to at least one of the previous claims, **characterized in that** plasticizers are added to the adhesive which are selected in particular from the group consisting of paraffinic or naphthenic oils, oligomeric nitrile rubbers, liquid isoprene rubbers, oligobutadienes, soft resins, wool fats and/or rapeseed oils and castor oils.

7. Self-adhesive article obtained according to at least one of the preceding claims, **characterized in that** the hot-melt pressure-sensitive adhesive is applied to at least one side of a web-form material.

8. Self-adhesive article according to at least one of the previous claims, **characterized in that** the thickness of the hot-melt pressure-sensitive adhesive on the web-form material is between 5 µm and 3000 µm, preferably between 15 µm and 150 µm.

9. Self-adhesive article according to at least one of the previous claims, **characterized in that** the hot-melt sensitive adhesive is applied in a thickness of from 20 µm to 3000 µm, in particular from 40 µm to 1500 µm, to a release paper having an anti-adhesive coating on both sides.

10. Process for producing self-adhesive articles, especially for producing high-performance self-adhesive articles such as tapes or labels, **characterized in that** the hot-melt pressure-sensitive adhesive according to one of claims 1 to 6 is applied with the aid of a multi-roll applicator unit which comprises from two to five rolls.

## Revendications

1. Masse adhésive autocollante à base d'un ou plusieurs élastomères non thermoplastiques, consistant au moins en
100 parties en masse du ou des élastomères non thermoplastiques,
1 à 200 parties en masse d'une ou plusieurs résines adhérisantes ainsi que de soufre ou de donneurs de soufre, où la masse adhésive autocollante contient de 20 millimoles à 8 moles du soufre libre par kg du ou des élastomères non thermoplastiques utilisés.

2. Masse adhésive autocollante selon la revendication 1, **caractérisée en ce que** les élastomères non thermoplastiques sont choisis dans le groupe constitué par des caoutchoucs naturels, des caoutchoucs de styrène - butadiène copolymérisés statistiquement (SBR), des caoutchoucs butadiène (BR) et des polyisoprènes synthétiques (IR).

3. Masse adhésive autocollante selon les revendications 1 et 2, **caractérisée en ce qu'**elle est à base d'un mélange de polymères constitué d'un ou plusieurs élastomères non thermoplastiques et d'un ou plusieurs des élastomères thermoplastiques, choisis dans le groupe formé par les polypropylènes, les polyéthylènes, les polyoléfines à catalyseur métallocène, les polyesters, les polystyrènes, et les copolymères blocs - caoutchoucs de synthèse.

4. Masse adhésive autocollante selon les revendications 1 à 3, **caractérisée en ce que** le soufre est accéléré par un catalyseur.

5. Masse adhésive autocollante selon les revendications 1 à 4, **caractérisée en ce que** la masse adhésive autocollante est additionnée de charges, en particulier choisies dans le groupe formé par les oxydes métalliques, les craies, les acides siliciques précipités ou pyrogènes, les billes de verre pleines ou creuses, les microballons, les suies, et/ou les fibres de verre ou de polymères.

6. Masse adhésive autocollante selon l'une au moins des revendications qui précèdent, **caractérisée en ce que** la masse adhésive autocollante est additionnée de plastifiants, en particulier choisis dans le groupe des huiles paraffiniques ou naphténiques, des caoutchoucs nitrile oligomères, des caoutchoucs d'isoprène liquides, des oligobutadiènes, des résines molles, des suints et/ou des huiles de colza et de ricin.

7. Article autocollant, obtenu selon l'une au moins des revendications qui précèdent, **caractérisé en ce que** la masse adhésive autocollante est appliquée d'un côté au moins sur un matériau en forme de bande.

8. Article autocollant selon l'une au moins des revendications qui précèdent, **caractérisé en ce que** l'épaisseur de la masse adhésive autocollante sur le matériau en forme de bande est de 5 µm à 3000 µm, de préférence de 15 µm à 150 µm.

9. Article autocollant selon l'une au moins des revendications qui précèdent, **caractérisé en ce que** la masse adhésive autocollante est appliquée en une épaisseur de 20 µm à 3000 µm, en particulier de 40 µm à 1500 µm, sur un papier de séparation à revêtement antiadhésif sur les deux côtés.

10. Procédé de préparation d'articles autocollants, en particulier pour la préparation d'articles autocollants à hautes performances tels que des rubans ou des étiquettes, **caractérisé en ce que** l'enduction de la masse adhésive autocollante est opérée selon l'une quelconque des revendications 1 à 6 à l'aide d'un applicateur à plusieurs rouleaux, qui présente de deux à cinq rouleaux.
